**Europäisches Patentamt**

**European Patent Office**

**Office européen des brevets**

(11) Veröffentlichungsnummer: **0 502 503 A1**

## EUROPÄISCHE PATENTANMELDUNG

(21) Anmeldenummer: **92103689.3**

(22) Anmeldetag: **04.03.92**

(51) Int. Cl.5: **F16L 33/04**, F16L 21/06, F16L 33/02, F16B 7/08, E04D 13/08

(30) Priorität: **05.03.91 DE 9102571 U**

(43) Veröffentlichungstag der Anmeldung:
**09.09.92 Patentblatt 92/37**

(84) Benannte Vertragsstaaten:
**BE DE ES FR NL**

(71) Anmelder: **FRIEDRICH WILHELM UND GUSTAV KETTLING GmbH**
**Altenaer Strasse 214**
**W-5880 Lüdenscheid(DE)**

(72) Erfinder: **Kettling, Friedrich**
**Altenaer Strasse 214**
**W-5880 Lüdenscheid(DE)**

(74) Vertreter: **Hassler, Werner, Dr.**
**Postfach 17 04 Asenberg 62**
**W-5880 Lüdenscheid(DE)**

(54) **Rauchrohrschelle.**

(57) Eine Rauchrohrschelle mit einem Ringband (1) und an den Enden des Ringbandes (1) befestigten U-förmigen Haltern (4) zur Aufnahme je eines Gelenkbolzens (10), wobei beide Gelenkbolzen (10) Durchgänge (11) für einen verbindenden Gewindestift (13) aufweisen. Das technische Problem ist eine solche Ausbildung der Rauchrohrschelle, daß die Gelenkbolzen (10) in sicherer Weise in den Haltern (4) sitzen und leicht und ungehindert verschwenkbar sind. Jeder Halter (4) weist in den Seitenwänden (7) etwa halbkreisförmige Aufnahmen (8) auf, und die Gelenkbolzen (10) haben einen Kreissegmentquerschnitt.

Fig. 1

EP 0 502 503 A1

Die Erfindung betrifft eine Rauchrohrschelle mit einem Ringband und an den Enden des Ringbandes befestigten U-förmigen Haltern zur Aufnahme je eines Gelenkbolzens, wobei beide Gelenkbolzen Durchgänge für einen verbindenden Gewindestift aufweisen.

Eine Rauchrohrschelle dieser Art erfordert einen hohen Montageaufwand für die Gelenkverbindungen innerhalb der Halter. Insbesondere sind die Gelenkbolzen nicht sicher in den Haltern aufgenommen.

Aufgabe der Erfindung ist eine solche Ausbildung der Rauchrohrschelle, daß die Gelenkbolzen in sicherer Weise in den Haltern sitzen und leicht und ungehindert verschwenkbar sind.

Diese Aufgabe wird nach der Erfindung dadurch gelöst, daß jeder Halter in den Seitenwänden etwa halbkreisförmige Aufnahmen aufweist und daß die Gelenkbolzen einen Kreissegmentquerschnitt haben.

Die Erfindung unterscheidet sich insofern vom Stand der Technik, als die Gelenkbolzen mit Kreissegmentquerschnitt innerhalb der halbkreisförmigen Aufnahmen sicher verschwenkbar sind. Die Gelenkbolzen sind auch sicher innerhalb der Halter gehalten und können nicht herausgleiten.

Eine wirtschaftliche Herstellung ergibt sich dadurch, daß die Gelenkbolzen Abschnitte eines Profilmaterials sind.

Eine einfache Sicherung der Gelenkbolze erzielt man dadurch, daß in den Seitenwänden der Halter Abdecklappen freigeschnitten und unter Verkröpfung an den Enden der Gelenkbolzen anliegen.

Eine stufenlose Verstellung ist dadurch möglich, daß der Durchgang des eines Gelenkbolzens als Gewindedurchgang ausgebildet ist.

Eine Verstellung in größerem Ausmaß wird dadurch möglich, daß der eine Halter an einem Verstellband sitzt, das auf dem Ringband stufenweise verstellbar ist.

Eine Ausführungsform der Erfindung wird im Folgenden unter Bezugnahme auf die anliegende Zeichnung erläutert, in der darstellen:

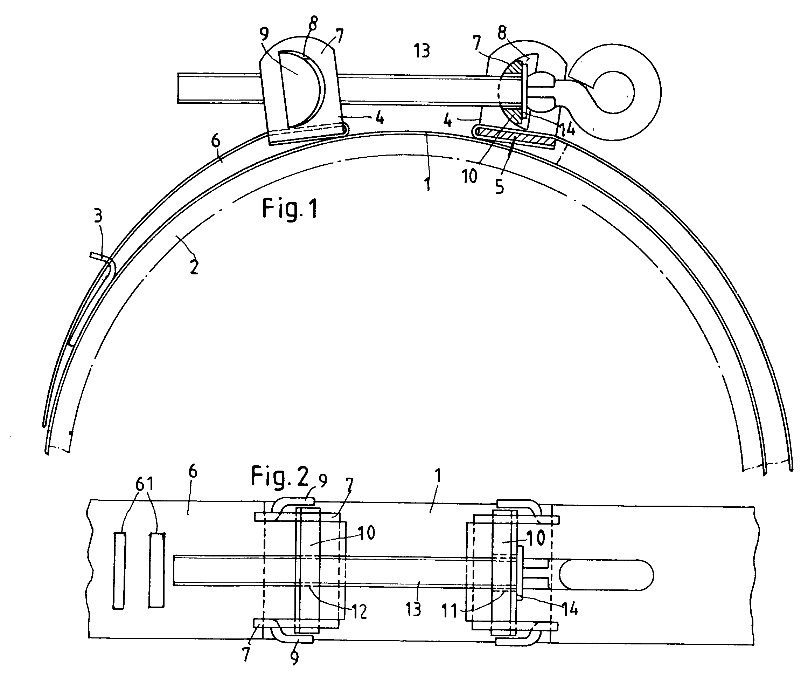

Fig. 1 einen Teilschnitt durch eine Rauchrohrschelle und

Fig. 2 eine Draufsicht zu Fig. 1.

Die Rauchrohrschelle umfaßt im wesentlichen ein Ringband 1, das ein Dichtungsband 2 umschließt. Das Ringband 1 endet einerseits in einen Hakenansatz 3 und ist andererseits unmittelbar mit einem U-förmigen Halter 4 verbunden. Der Kalter 4 ist z.B. mit seinem Mittelsteg 5 in eine ösenförmige Umbiegung des Ringbandes 1 eingehängt. Ein vergleichsweise kurzes Verstellband 6 ist mit einem von mehreren Durchbrüchen 61 in den Hakenansatz 3 einhängbar. Das Verstellband 6 ermöglicht somit eine stufenweise Verstellung des Durchmessers der Rauchrohrschelle. Das Verstellband 6 ist in einen weiteren Halter 4 eingehängt.

Jeder Halter 4 trägt an dem Mittelsteg zwei abgebogene Seitenwände 7 mit halbkreisförmigen Aufnahmen 8. Innerhalb jeder Aufnahme 8 ist ein Abdecklappen 9 freigeschnitten und unter Verkröpfung wieder parallel zu der Seitenwand 7 ausgerichtet.

Für die Verbindung und Verstellung des Ringbandes sind Gelenkbolzen vorgesehen, die jeweils Abschnitte eines Profilmaterials sind. Das Profilmaterial bzw. die Gelenkbolzen 10 haben einen Kreissegmentquerschnitt, der kleiner als ein Halbkreis ist. Infolgedessen liegen die Segmentbolzen 10 innerhalb der Aufnahmen 8 und sind darin verschwenkbar. Die Gelenkbolzen 10 sind durch die Abdecklappen 9 gegen ein Herausfallen gesichert und werden dadurch festgehalten.

Jeder Gelenkbolzen 10 hat einen Durchgang 11 bzw. einen Gewindedurchgang 12. Ein Gewindestift 13 verbindet die Gelenkbolzen 10. Der Gewindestift 13 ist durch eine Scheibe 14 an dem einen Gelenkbolzen 10 gesichert und greift in den Gewindedurchgang 12 des anderen Gelenkbolzens 10 ein. Der Gewindestift 13 ermöglicht eine stufenlose Feineinstellung der Rauchrohrschelle. Die Rauchrohrschelle kann somit mit Hilfe der Durchbrüche 61 des Verstellbandes 6 stufenweise und mit Hilfe des Gewindestiftes 13 stufenlos feineingestellt werden.

**Patentansprüche**

1. Rauchrohrschelle mit einem Ringband und an den Enden des Ringbandes befestigten U-förmigen Haltern zur Aufnahme je eines Gelenkbolzens, wobei beide Gelenkbolzen Durchgänge für einen verbindenden Gewindestift aufweisen, dadurch gekennzeichnet, daß jeder Halter (4) in den Seitenwänden (7) etwa halbkreisförmige Aufnahmen (8) aufweist und daß die Gelenkbolzen (10) einen Kreissegmentquerschnitt haben.

2. Rauchrohrschelle nach Anspruch 1, dadurch gekennzeichnet, daß die Gelenkbolzen (10) Abschnitte eines Profilmaterials sind.

3. Rauchrohrschelle nach Anspruch 1 oder 2, dadurch gekennzeichnet, daß in den Seitenwänden (7) der Halter (4) Abdecklappen (9) freigeschnitten und unter Verkröpfung an den Enden der Gelenkbolzen (10) anliegen.

4. Rauchrohrschelle nach einem der Ansprüche 1 bis 3, dadurch gekennzeichnet, daß der Durchgang des eines Gelenkbolzens als Gewindedurchgang (12) ausgebildet ist.

**5.** Rauchrohrschelle nach einem der Ansprüche 1 bis 4, dadurch gekennzeichnet, daß der eine Halter an einem Verstellband (6) sitzt, das auf dem Ringband (1) stufenweise verstellbar ist.

EP 0 502 503 A1

Fig.1

Fig.2

4

| | **EINSCHLÄGIGE DOKUMENTE** | | EP 92103689.3 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | AT - B - 387 634 <br> (OETIKER HANS) <br> * Gesamt * <br> -- | 1,4,5 | F 16 L 33/04 <br> F 16 L 21/06 <br> F 16 L 33/02 <br> F 16 B 7/08 |
| A | CH - A - 668 110 <br> (ETERNIT AG) <br> * Gesamt * <br> -- | 1,4 | E 04 D 13/08 |
| A | EP - A - 0 157 517 <br> (PETERSON AMERICAN CORP.) <br><br> ---- | | |

| RECHERCHIERTE SACHGEBIETE (Int Cl⁵) |
|---|
| F 16 L 21/00 <br> F 16 L 33/00 <br> F 16 B 7/00 <br> E 04 D 13/00 |

Der vorliegende Recherchenbericht wurde für alle Patentansprüche erstellt.

| Recherchenort | Abschlußdatum der Recherche | Prüfer |
|---|---|---|
| WIEN | 07-05-1992 | SCHUGANICH |